# FASCICULE DE BREVET EUROPEEN

(11) **EP 2 788 962 B1**
(45) Date de publication et mention de la délivrance du brevet: **16.03.2016**
(21) Numéro de dépôt: 12797917.7
(22) Date de dépôt: 06.12.2012
(51) Int. Cl.: G08C 17/02, E06B 9/00, H04L 12/28

(54) **PROCÉDÉ DE COMMUNICATION DANS UN SYSTÈME COMPRENANT UNE ENTITÉ D'ALIMENTATION ET DE COMMUNICATION ET UN ACTIONNEUR DOMOTIQUE**
VERFAHREN ZUR KOMMUNIKATION IN EINEM SYSTEM MIT EINER STROMVERSORGUNG UND KOMMUNIKATIONSEINHEIT UND EINEM DOMOTIKAKTUATOR
METHOD FOR COMMUNICATING IN A SYSTEM COMPRISING A POWER SUPPLY AND COMMUNICATION ENTITY AND A HOME-AUTOMATION ACTUATOR

(30) Priorité: 06.12.2011 FR 1161198
(43) Date de publication de la demande: 15.10.2014
(73) Titulaire: Somfy SAS, 74300 Cluses (FR)
(72) Inventeur: DESBIOLLES, Claude, F-74800 Eteaux (FR); GERMAIN, Florian, F-74960 Meythet (FR); MUGNIER, Daniel, F-74190 Passy (FR); RIFFAUD, Stéphane, F-74700 Sallanches (FR)
(74) Mandataire: Novaimo
(86) Numéro de dépôt international: PCT/EP2012/074704
(87) Numéro de publication internationale: WO 2013/083727

(56) Documents cités:
- US-B1- 8 000 656

## Description

### Domaine de l'invention

L'invention concerne le domaine des installations domotiques comprenant des actionneurs électriques pour l'entraînement d'un élément mobile dans un bâtiment, tels que des fermetures ou protections solaires.

Ces actionneurs, en fonctionnement normal sur le site, sont commandés par l'intermédiaire d'une interface radio et/ou d'une interface filaire.

En cours de mise au point, de production, d'assemblage du produit porteur en usine, d'identification et de diagnostic d'un actionneur sur site, il est nécessaire de dialoguer avec l'actionneur, pour transmettre et/ou recevoir des informations telles que date d'assemblage, couple, vitesse, numéro de série, etc. un tel dialogue est par exemple nécessaire afin de calibrer le dispositif à produire, comme suggéré dans le document US 8,000,656.

Ce dialogue est effectué à l'aide d'une entité d'alimentation et de communication capable d'alimenter l'actionneur et de communiquer avec ce dernier.

La communication doit être effectuée de manière à couvrir l'ensemble de la gamme et avec un surcoût minimum.

### Etat de la technique

Des solutions pour réaliser une communication entre un actionneur et une entité d'alimentation et de communication sont connues, par exemple utilisant une interface filaire de type UART ou USB. Des interfaces et des composants dédiés doivent être utilisés pour la connexion, ce qui induit une augmentation du coût et de complexité des produits. De plus, pour la programmation de ces interfaces, le débit et le format de données doivent être connus à l'avance par l'actionneur et l'entité d'alimentation et de communication.

Une communication pourra être réalisée seulement entre un émetteur et un récepteur partageant les mêmes débits et formats de données. De ce fait une entité d'alimentation et de communication pourra communiquer uniquement avec un sous-ensemble de la gamme d'actionneurs.

Les paramètres d'une communication peuvent aussi varier avec les conditions de fonctionnement. Par exemple, une variation importante de température peut provoquer une variation des signaux échangés.

L'invention se propose de résoudre ces problèmes, et de permettre à une entité d'alimentation et de communication de communiquer avec différents actionneurs, ou avec un même actionneur ACT, dans des conditions variables.

### Résumé de l'invention

L'invention concerne un procédé de communication d'un actionneur domotique comprenant un moteur électrique d'entraînement d'un élément mobile dans un bâtiment et deux bornes électriques permettant l'alimentation de l'actionneur par une entité d'alimentation et de communication et la communication entre l'actionneur et l'entité d'alimentation et de communication. Le procédé comprend les étapes :
- analyse d'un signal d'alimentation fourni par l'entité d'alimentation et de communication;
- génération d'une première séquence temporelle d'un signal de réponse, représentative d'un élément binaire de calibration prédéterminé, dite première séquence de calibration;
- émission d'une suite de séquences temporelles du signal de réponse, représentative d'une suite d'éléments binaires, chaque élément binaire de cette suite, égal à l'élément binaire de calibration, étant représenté par une séquence temporelle image de la première séquence de calibration.

Dans un mode particulier de réalisation de l'invention, le procédé de communication comprend en outre, préalablement à l'étape d'émission, une étape de génération d'une deuxième séquence temporelle du signal de réponse, représentative d'un élément binaire complémentaire à l'élément binaire de calibration, dite deuxième séquence de calibration. Dans ce mode de réalisation, par un envoi explicite de la deuxième séquence de calibration, la procédé gagne en en robustesse et simplicité.

Dans un autre mode de réalisation, l'étape d'émission comprend la génération, pour chaque élément binaire différent de l'élément binaire de calibration, d'une séquence temporelle image de la deuxième séquence de calibration, permettant ainsi un gain en robustesse et une simplification pour l'étape d'émission de données, car la séquence temporelle représentative est connue pour les deux éléments binaires pouvant constituer une trame de données.

Dans un mode préféré de réalisation, l'étape de génération de la première séquence de calibration par l'actionneur comprend les sous-étapes :
- configuration de l'impédance de l'actionneur à une première valeur pendant une première durée;
- configuration de l'impédance de l'actionneur à une deuxième valeur pendant une deuxième durée.

Le procédé peut comprendre, pour l'étape de génération de la première séquence de calibration, une sous-étape de configuration de l'impédance dudit actionneur à une troisième valeur pendant une troisième durée. Avantageusement, la communication est réalisée par l'actionneur sans l'ajout d'éléments matériels supplémentaires, en utilisant des éléments matériels déjà présents dans le moteur, mais en les configurant de manière différente, pour générer la première séquence de calibration SeqCal.

Dans un mode particulier de réalisation, le procédé comprend une étape de détection par l'actionneur d'une variation temporelle du signal d'alimentation, représentative d'une requête de calibration émise par l'entité d'alimentation et de communication. De cette manière, l'actionneur peut détecter une requête de calibration émise par l'entité IMS, suite à un changement des conditions de fonctionnement nécessitant une nouvelle calibration ; la communication est alors réinitialisée à l'initiative de l'entité d'alimentation et de communication.

Le procédé peut aussi comprendre une étape de génération par l'actionneur d'une troisième séquence temporelle du signal de réponse, représentative d'une signalisation de calibration émise par l'actionneur. Avantageusement, l'actionneur peut signaler une nouvelle génération d'une séquence de calibration SeqCal, suite à un changement des conditions de fonctionnement détecté par l'actionneur ; la communication est alors réinitialisée à l'initiative de l'actionneur.

L'invention concerne aussi un procédé de communication d'une entité d'alimentation et de communication comprenant deux bornes électriques permettant d'alimenter un actionneur domotique comprenant un moteur électrique d'entraînement d'un élément mobile dans un bâtiment et de communiquer avec cet actionneur ,le procédé comprenant les étapes :
- génération d'un signal d'alimentation entre les bornes électriques;
- détermination d'une première séquence temporelle d'un signal de réponse, dite première séquence de calibration ;
- attribution d'une signification de représentation d'un premier élément binaire de calibration prédéterminé à la première séquence de calibration ;
- réception d'une suite de séquences temporelles du signal de réponse, représentative d'une suite d'éléments binaires, chaque élément binaire de cette suite, égal à l'élément binaire de calibration, étant représenté par une séquence temporelle image de la première séquence de calibration.

Dans un mode de réalisation, le procédé mis en oeuvre par l'entité d'alimentation et de communication comprend en outre une étape de détermination d'une deuxième séquence temporelle du signal de réponse, représentative de l'élément binaire complémentaire à l'élément binaire de calibration, dite deuxième séquence de calibration. L'entité d'alimentation et de communication détermine alors, par détection ou par déduction et calcul, la deuxième séquence de calibration, procurant ainsi un gain en robustesse du procédé de communication.

Dans un mode préféré de réalisation du procédé mis en oeuvre par l'entité d'alimentation et de communication, l'étape de détermination de la première séquence de calibration comprend les sous-étapes :
- détermination d'une première valeur seuil du signal de réponse ;
- détermination d'une valeur extrême du signal de réponse ;
- détermination d'une deuxième valeur seuil du signal de réponse (I, u).
De cette manière, l'entité d'alimentation et de communication peut déterminer la séquence de calibration indépendamment de la durée de cette séquence temporelle.

Dans un mode particulier de réalisation du procédé de communication mis en oeuvre par l'entité d'alimentation et de communication, l'étape de réception de la suite de séquences temporelles comprend les sous-étapes :
- détection d'une séquence temporelle du signal de réponse, représentative d'un élément binaire, dite séquence de données;
- détermination de la valeur de l'élément binaire par comparaison de la séquence de données avec au moins la première séquence de calibration.

Une séquence de données image de la première séquence de calibration est interprétée comme représentant un bit de données égal à l'élément binaire de calibration. L'entité d'alimentation et de communication peut ainsi recevoir des données en utilisant la séquence de calibration : les séquences représentatives des éléments binaires ne sont pas prédéterminés, elles peuvent changer d'un actionneur à un autre, ou avec les conditions de fonctionnement ; le procédé permet de cette manière à l'entité IMS de communiquer avec différents actionneurs et/ou dans des conditions de fonctionnement variables.

Dans un mode de réalisation du procédé de communication mis en oeuvre par l'entité d'alimentation et de communication, l'étape de détection de la séquence de données comprend les sous-étapes :
- détection d'une première valeur du signal de réponse sensiblement égale à la première valeur seuil;
- détection d'une deuxième valeur du signal de réponse sensiblement égale à la valeur extrême;
- détection d'une troisième valeur du signal de réponse sensiblement égale à la deuxième valeur seuil.
De cette manière, l'entité d'alimentation et de communication peut déterminer la séquence de données indépendamment de la durée de la séquence temporelle, en utilisant des valeurs seuils du signal de réponse.

Dans un mode de réalisation particulier, le procédé mis en oeuvre par l'entité d'alimentation et de communication comprend une étape de génération d'une variation temporelle du signal d'alimentation, représentative d'une requête de calibration émise par l'entité d'alimentation et de communication. L'entité, suite à un changement des conditions de fonctionnement nécessitant une nouvelle calibration, peut ainsi demander la génération d'une nouvelle séquence de calibration ; la communication est alors réinitialisée, autrement dit recalibrée, à l'initiative de l'entité d'alimentation et de communication.

Le procédé mis en oeuvre par l'entité d'alimentation et de communication peut aussi comprendre une étape de détection d'une troisième séquence temporelle du signal de réponse, représentative d'une signalisation de calibration émise par l'actionneur. L'entité d'alimentation et de communication peut de cette façon détecter la signalisation d'une nouvelle génération d'une séquence de calibration, suite à un changement des conditions de fonctionnement détecté par l'actionneur ; la communication est alors réinitialisée, ou recalibrée, à l'initiative de l'actionneur.

L'invention concerne aussi un procédé de communication d'un système comprenant une entité d'alimentation et de communication comprenant deux bornes électriques, et au moins un actionneur domotique comprenant un moteur électrique pour entraîner un élément mobile dans un bâtiment et deux bornes électriques ; une connexion entre les bornes électriques permet l'alimentation de l'actionneur par l'entité d'alimentation et de communication, ainsi que et la communication entre l'actionneur et l'entité d'alimentation et de communication. Le procédé comprend les étapes :
- génération, par l'entité d'alimentation et de communication, d'un signal d'alimentation entre les bornes électriques;
- analyse, par l'actionneur, du signal d'alimentation ;
- génération, par l'actionneur, d'une première séquence temporelle d'un signal de réponse, représentative d'un premier élément binaire de calibration prédéterminé, dite première séquence de calibration;
- détermination, par l'entité d'alimentation et de communication, de la première séquence de calibration ;
- attribution, par l'entité d'alimentation et de communication, d'une signification de représentation de l'élément binaire de calibration prédéterminé, à la première séquence de calibration ;
- émission, par l'actionneur d'une suite de séquences temporelles du signal de réponse, représentative d'une suite d'éléments binaires, chaque élément binaire de cette suite, égal à l'élément binaire de calibration, étant représenté par une séquence temporelle image de la première séquence de calibration ;
- réception, par l'entité d'alimentation et de communication, de la suite de séquences temporelles du signal de réponse, représentative de la suite d'éléments binaires.

Corrélativement, l'invention concerne un actionneur domotique comprenant un moteur électrique d'entraînement d'un élément mobile dans un bâtiment, deux bornes électriques permettant l'alimentation de l'actionneur par une entité d'alimentation et de communication et la communication entre l'actionneur et l'entité d'alimentation et de communication , et des moyens
- d'analyse du signal d'alimentation fourni par l'entité d'alimentation et de communication ;
- de génération d'une première séquence temporelle d'un signal de réponse représentative d'un élément binaire de calibration prédéterminé, dite première séquence de calibration ;
- d'émission d'une suite de séquences temporelles du signal de réponse, représentative d'une suite d'éléments binaires, chaque élément binaire de cette suite, égal à l'élément binaire de calibration, étant représenté par une séquence temporelle image de la première séquence de calibration.

L'invention concerne aussi une entité d'alimentation et de communication comprenant deux bornes électriques permettant d'alimenter un actionneur domotique comprenant un moteur électrique d'entraînement d'un élément mobile dans un bâtiment et de communiquer avec cet actionneur, et des moyens
- de génération d'un signal d'alimentation entre les bornes électriques;
- de détermination d'une première séquence temporelle d'un signal de réponse, dite première séquence de calibration;
- d'attribution d'une signification de représentation d'un premier élément binaire de calibration prédéterminé à la première séquence de calibration;
- de réception d'une suite de séquences temporelles du signal de réponse, représentative d'une suite d'éléments binaires, chaque élément binaire de cette suite, égal à l'élément binaire de calibration, étant représenté par une séquence temporelle image de la première séquence de calibration.

Corrélativement, l'invention concerne un système comprenant une entité d'alimentation et de communication et au moins un actionneur comme décrits précédemment.

L'invention concerne aussi un support d'enregistrement lisible par un processeur sur lequel est enregistré un programme d'ordinateur comprenant des instructions pour l'exécution des étapes du procédé de communication d'un actionneur défini précédemment.

L'invention concerne aussi un support d'enregistrement lisible par un processeur sur lequel est enregistré un programme d'ordinateur comprenant des instructions pour l'exécution des étapes du procédé de communication d'une entité d'alimentation et de communication définie précédemment.

### Brève description des figures

La figure 1 représente un système SYS mettant en oeuvre l'invention.
Les figures 2a et 2b représentent, sous forme simplifiée, deux modes de réalisation d'un moteur faisant partie d'un actionneur conforme à l'invention.
Les figures 3, 3a et 3b représentent, sous forme d'ordinogramme, les principales étapes d'un procédé de communication conforme à l'invention, mis en oeuvre par une entité d'alimentation et de communication IMS.
Les figures 4, 4a et 4b représentent, sous forme d'ordinogramme, les principales étapes d'un procédé de communication conforme à l'invention, mis en oeuvre par un actionneur ACT.
La figure 5 représente une suite de séquences temporelles du signal de réponse utilisées pour la communication montante.
La figure 6 représente les principaux échanges entre une entité d'alimentation et de communication IMS et un actionneur ACT, dans un système SYS conforme à l'invention.

### Description détaillée d'un mode de réalisation préféré

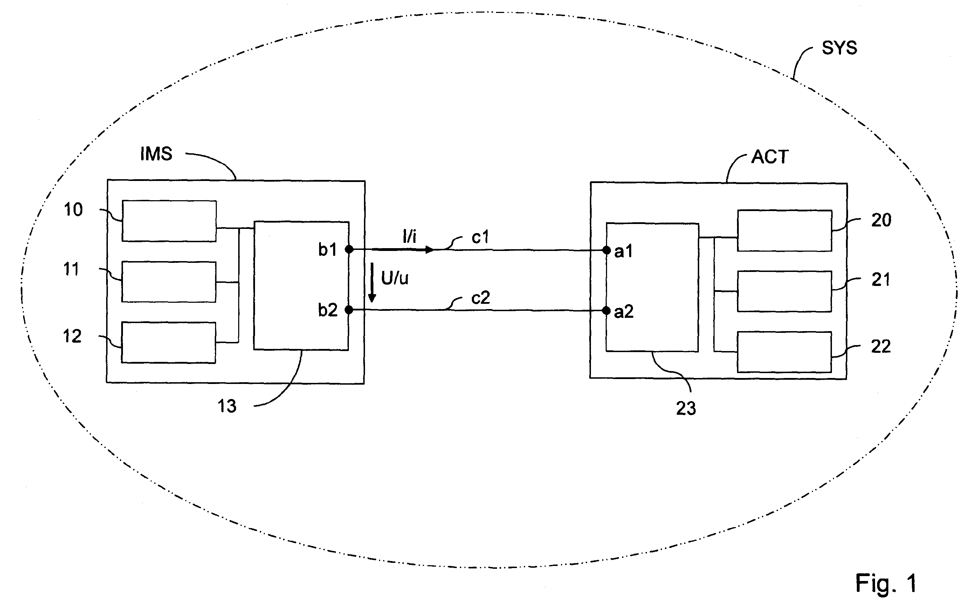

Sur la figure 1, on a représenté un système domotique comprenant une entité d'alimentation et de communication IMS comprenant un processeur 10, une mémoire vive de type RAM 11, une mémoire programme non volatile, éventuellement réinscriptible, de type ROM ou flash 12 et une interface ligne 13 permettant d'alimenter un actionneur ACT et de communiquer avec ce dernier par l'intermédiaire des deux bornes électriques b1, b2.

Sur la figure 1 est également représenté l'actionneur ACT comprenant un processeur 20, une mémoire vive de type RAM 21, une mémoire programme non volatile, éventuellement réinscriptible, de type ROM ou flash 22 et une interface ligne 23 pour recevoir la tension d'alimentation et communiquer avec l'entité d'alimentation et de communication IMS par l'intermédiaire des deux bornes électriques a1, a2. L'actionneur est de préférence un actionneur domotique. Il comprend un moteur électrique d'entraînement d'un élément mobile d'un bâtiment, comme un élément mobile de fermeture, d'occultation, de protection solaire ou d'écran.

Les interfaces lignes 13 et 23 sont connectées par deux fils c1, c2 aptes à connecter l'actionneur ACT à une alimentation électrique générée par l'entité d'alimentation et de communication IMS et à constituer un support physique de communication entre l'actionneur ACT et l'entité d'alimentation et de communication IMS.

L'entité d'alimentation et de communication IMS fournit, à l'actionneur ACT, un signal d'alimentation électrique, sous la forme d'un signal de tension U ou de courant électrique i.

Ce signal est généré par l'entité d'alimentation et de communication IMS entre ses bornes électriques b1, b2.

Les fils c1, c2 réalisent une connexion électrique entre les bornes électriques b1, b2, de l'entité d'alimentation et de communication IMS et les bornes électriques a1, a2 de l'actionneur ACT, permettant ainsi l'alimentation électrique de ce dernier.

Dans la suite de ce document le signal d'alimentation électrique, fourni par l'entité d'alimentation et de communication IMS à l'actionneur ACT, est nommé « signal d'alimentation ».

L'actionneur ACT constitue, vu de ses bornes a1, a2, une impédance de charge pour l'entité d'alimentation et de communication IMS.

Suite à la connexion des fils c1, c2, entre les bornes électriques a1, a2, de l'actionneur ACT et b1, b2, de l'entité d'alimentation et de communication IMS, un signal électrique s'établit en réponse : si l'alimentation électrique est fournie sous la forme d'un signal de tension U, ce signal est l'intensité du courant électrique I.

Alternativement, l'alimentation peut être fournie sous la forme d'un signal de courant électrique i ; dans ce cas, le signal établit en réponse est une tension électrique u.

Dans la suite de ce document, le signal qui s'établit suite à la génération du signal d'alimentation U, i, et à la connexion des fils c1, c2, entre les bornes électriques a1, a2, de l'actionneur ACT et b1, b2, de l'entité d'alimentation et de communication IMS, est nommé « signal de réponse ».

Ainsi, ces signaux d'alimentation et de réponse sont donc présents sur les fils c1, c2 et au niveau des bornes a1, a2 et b1, b2.

Le signal de réponse qui s'établit dépend d'une part du signal d'alimentation fourni par l'entité d'alimentation et de communication IMS et d'autre part de l'impédance de l'actionneur ACT. En effet, ce dernier, en provoquant une variation de son impédance Zact, crée une variation du signal de réponse et transmet ainsi une information à l'entité d'alimentation et de communication IMS.

La communication entre l'actionneur ACT et l'entité d'alimentation et de communication IMS se fait alors par l'envoi de données par l'actionneur ACT, sous forme d'une trame de données constituant au moins une partie du signal de réponse. La trame de données correspond préférentiellement à une suite d'éléments binaires, représentés par des variations du signal de réponse circulant sur les fils c1, c2.

L'entité d'alimentation et de communication IMS comprend des moyens de détection de courant, respectivement de tension. En utilisant des techniques connues par l'homme du métier, comme l'échantillonnage et la mémorisation, l'entité d'alimentation et de communication IMS peut déterminer les variations dans le temps du signal de réponse,. Un ensemble des variations temporelles du signal de réponse durant une période temporelle est appelé dans la suite de ce document « séquence temporelle du signal de réponse ». La durée de la période temporelle est déterminée selon un critère partagé par l'actionneur ACT et l'entité d'alimentation et de communication IMS. Un tel critère peut être une durée prédéterminée ou le passage du signal de réponse, lors de ses variations, par des valeurs seuils prédéfinies, et éventuellement par des valeurs extrêmes entre ces valeurs seuils prédéfinies. Les deux critères peuvent être combinés pour délimiter une même séquence, comme sera expliqué par la suite.

Une séquence temporelle du signal de réponse peut être représentée par un premier graphique temporel. On appelle « image » d'une séquence temporelle tout ensemble de variations temporelles du signal de réponse pouvant être représenté par un deuxième graphique temporel identique ou sensiblement identique au premier graphique temporel.

Les procédés de communication conformes à l'invention sont par exemple mis en oeuvre dans un système SYS représenté sur la figure 1.

Ce système SYS comprend une entité d'alimentation et de communication IMS, comprenant deux bornes électriques b1, b2, et au moins un actionneur ACT domotique comprenant un moteur électrique pour entraîner un élément mobile dans un bâtiment et deux bornes électriques a1, a2. Une connexion par l'intermédiaire des fils c1, c2, entre les bornes électriques de l'entité d'alimentation et de communication IMS, b1, b2 et celles de l'actionneur, a1, a2, permet l'alimentation de l'actionneur ACT par l'entité d'alimentation et de communication IMS et la communication entre l'actionneur ACT et l'entité d'alimentation et de communication IMS.

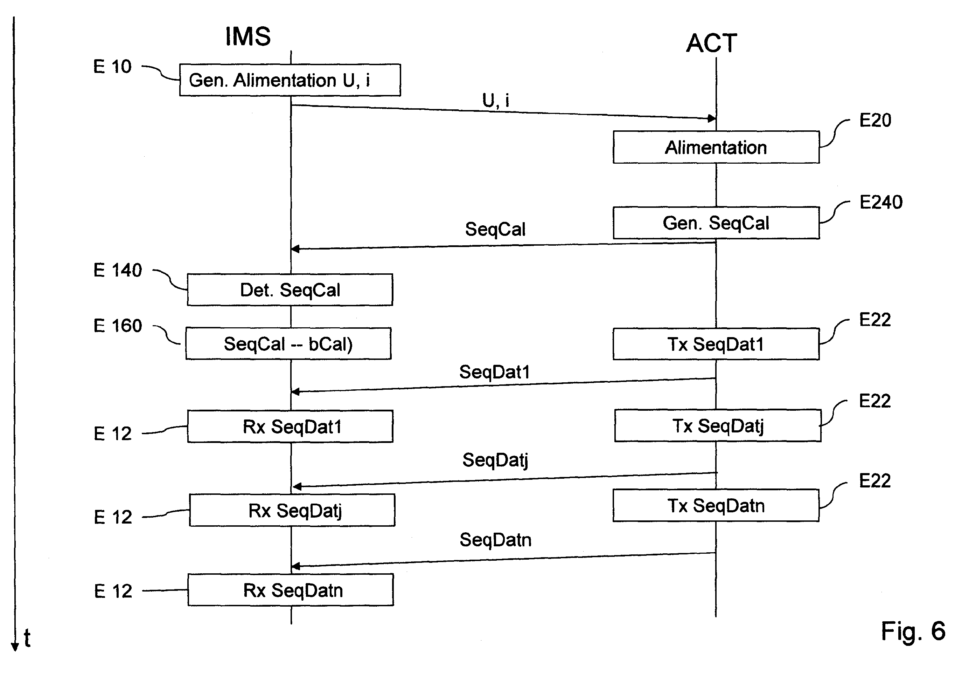

En référence à la figure 6, nous allons décrire les principales étapes d'un mode d'exécution d'un procédé de communication conforme à l'invention. De façon générale, ce procédé de communication du système SYS comporte les étapes suivantes :
- une étape E10, mise en oeuvre par l'entité d'alimentation et de communication IMS, de génération d'un signal d'alimentation en tension U, respectivement en courant i, entre les bornes électriques b1, b2;
- une étape E20, mise en oeuvre par l'actionneur ACT, d'analyse du signal d'alimentation U, respectivement i ;
- une étape E240, mise en oeuvre par l'actionneur ACT, de génération d'une première séquence temporelle d'un signal de réponse en courant I, respectivement en tension u, représentative d'un premier élément binaire de calibration prédéterminé bCal, dite première séquence de calibration SeqCal ;
- une étape E140, mise en oeuvre par l'entité d'alimentation et de communication IMS, de détermination de la première séquence de calibration SeqCal ;
- une étape E160, mise en oeuvre par l'entité d'alimentation et de communication IMS, d'attribution d'une signification de représentation de l'élément binaire de calibration prédéterminé bCal, à la première séquence de calibration SeqCal ;
- une étape E22, mise en oeuvre par l'actionneur ACT, d'émission d'une suite de séquences temporelles du signal de réponse I, respectivement u, représentative d'une suite d'éléments binaires, chaque élément binaire de cette suite, égal à l'élément binaire de calibration bCal, étant représenté par une séquence temporelle image de la première séquence de calibration SeqCal ;
- une étape E12, mise en oeuvre par l'entité d'alimentation et de communication IMS, de réception de la suite de séquences temporelles du signal de réponse I, respectivement u, représentative de la suite d'éléments binaires.

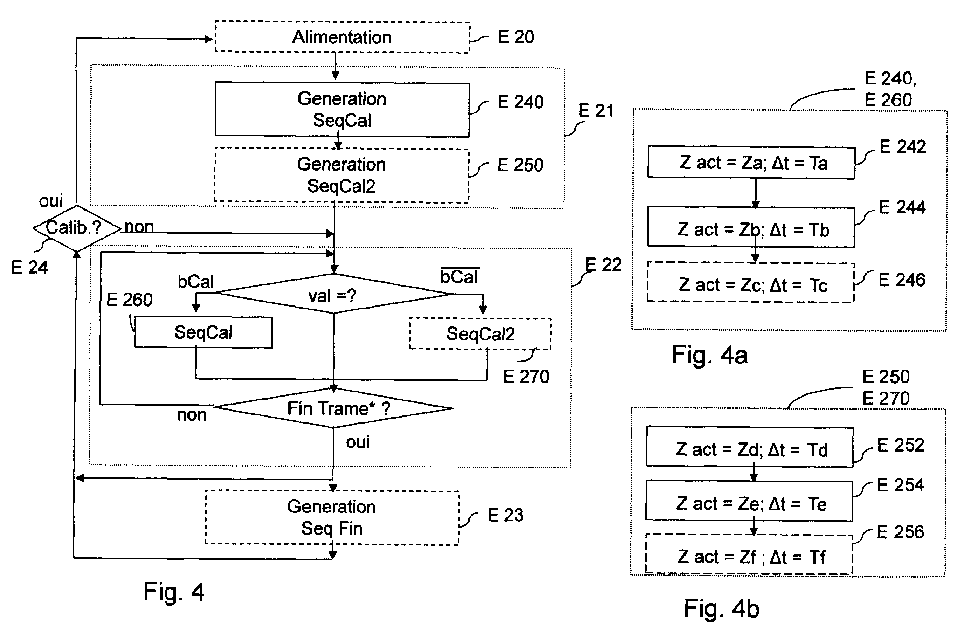

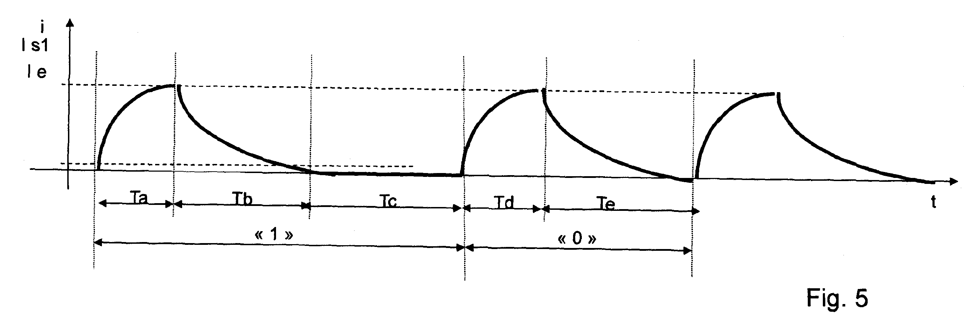

Un mode de réalisation du procédé de communication mis en oeuvre par un actionneur ACT est décrit en référence aux figures 4, 4a, 4b et 5.

L'actionneur ACT détermine, lors d'une étape E20 si un signal d'alimentation en tension U, respectivement en courant i, est fourni au niveau de ses bornes a1, a2.

Ensuite, l'actionneur ACT génère, lors d'une étape E240, une première séquence temporelle du signal de réponse, représentative d'un élément binaire de calibration bCal prédéterminé, dite première séquence de calibration SeqCal.

Le deuxième élément binaire, complémentaire à l'élément binaire de calibration bCal, peut être représenté par une deuxième séquence de calibration SeqCal2.

Cette deuxième séquence de calibration SeqCal2 peut être générée par l'actionneur ACT, lors d'une étape E250. Alternativement, la deuxième séquence de calibration SeqCal2 peut être déduite à partir de la première séquence de calibration SeqCal, par exemple par ajout ou suppression d'une partie prédéterminée de l'image de la première séquence de calibration SeqCal.

A noter que seulement la première séquence de calibration SeqCal doit être connue, l'élément binaire complémentaire pouvant être constitué par une séquence quelconque, pas nécessairement toujours la même, différente de la première séquence de calibration SeqCal. La séquence de calibration de l'élément binaire complémentaire peut également être déduite de la première séquence de calibration.

L'étape E240 de génération de la première séquence de calibration SeqCal, suivie éventuellement de l'étape optionnelle E250 de génération ou de déduction de la deuxième séquence de calibration SeqCal2, constitue(nt) une étape E21 de calibration.

Le rôle de cette étape E21 est de transmettre à l'entité d'alimentation et de communication IMS les informations concernant l'encodage des données qui seront transmises par la suite. De cette manière l'encodage peut changer à chaque nouvelle connexion et/ou à chaque modification de conditions de transmission.

L'étape E21 de calibration est suivie d'une étape E22 d'émission d'une trame de données, sous la forme d'une suite de séquences temporelles du signal de réponse I, respectivement u, représentative d'une suite d'éléments binaires constituant la trame de données à émettre.

L'actionneur ACT génère, pour chaque élément binaire de données égal à l'élément binaire de calibration bCal, une séquence temporelle du signal de réponse, image de la première séquence de calibration SeqCal.

Un élément binaire de données complémentaire au bit de calibration bCal peut être représenté par une séquence temporelle du signal de réponse image de la deuxième séquence de calibration SeqCal2.

L'actionneur ACT peut avoir une trame de données à émettre, par exemple :
- suite à une réception d'une trame préalablement émise par l'entité d'alimentation et de communication IMS, si cette trame demande un acquittement ou une information applicative de la part de l'actionneur ACT ;
- suite à un autotest (test de lui-même) effectué par l'actionneur ACT après sa mise sous tension, pour transmettre à l'entité d'alimentation et de communication IMS le résultat de l'autotest et des informations telles que la version matérielle et logicielle, numéro de lot, paramètres de fonctionnement ;
- suite à un événement détecté par l'actionneur, sans requête préalable de la part de l'entité d'alimentation et de communication IMS.

Dans un mode de réalisation, l'actionneur ACT et l'entité d'alimentation et de communication IMS utilisent des fils dédiés pour l'alimentation électrique, et des fils dédiés c1, c2, pour la communication. Dans ce cas, le générateur de tension, respectivement de courant, utilisé pour la communication peut fournir des signaux U, respectivement i, uniquement pour l'alimentation de l'interface de communication. Cette interface comprend les bornes b1, b2 de l'entité d'alimentation et de communication IMS, les bornes a1, a2 de l'actionneur ACT et les fils c1, c2.

Alternativement, l'actionneur ACT et l'entité d'alimentation et de communication IMS utilisent les mêmes fils c1, c2, pour réaliser différents modes de fonctionnement mutuellement exclusifs, tel un mode d'exécution de commande et un mode de communication descendante et/ou montante. Les mêmes fils c1, c2 sont utilisés pour alimenter l'actionneur ACT, quelque soit le mode de fonctionnement.

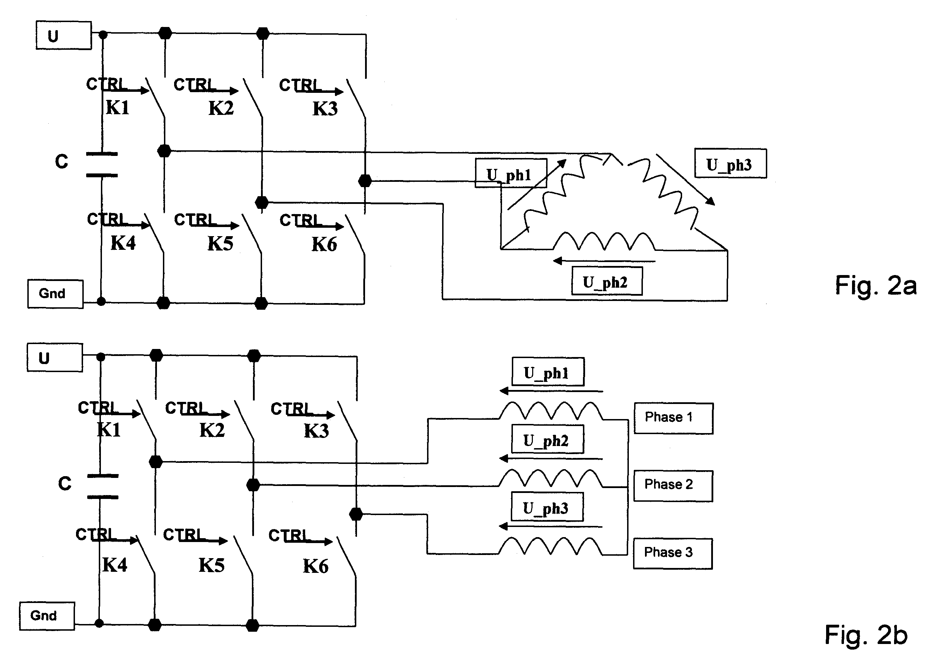

Pendant le mode d'exécution de commande, le fonctionnement du moteur est contrôlé par des composants électroniques comme illustré de manière schématique par les figures 2a et 2b.

Pendant le mode de communication montante, l'actionneur ACT utilise les composants électroniques, utilisés en mode exécution de commande pour le contrôle du moteur, de manière différente, c'est-à-dire pour configurer l'actionneur en tant qu'impédance de charge ayant des valeurs particulières.

En variant la configuration des composants électroniques, l'actionneur ACT peut varier l'impédance de charge Zact présentée à l'entité d'alimentation et de communication IMS ; de cette manière l'actionneur ACT peut générer des variations du signal de réponse en courant, respectivement en tension, à ses bornes a1, a2 et sur les fils c1, c2.

Quelque soit la configuration, fils c1, c2, dédiés pour la communication ou mêmes fils c1, c2, utilisés pour l'alimentation et la communication, l'actionneur réalise l'émission d'une trame sur ces fils c1, c2, en variant son impédance d'entrée.

De cette manière, pour un signal d'alimentation en tension U, l'actionneur ACT va provoquer une variation du signal de réponse en courant I, et pour un signal d'alimentation en courant i, une variation du signal de réponse en tension u.

L'invention peut être mise en oeuvre par un actionneur ACT utilisant des moteurs connus par l'homme du métier sous le nom de moteurs de type « sans balai » (ou « Brushless » en anglais), représenté schématiquement dans les figures 2a et 2b.

La commande de ces moteurs en fonctionnement normal est assurée par les commutateurs électroniques K1, K2, K3, K4, K5 et K6, réalisés par exemple en utilisant des transistors MOS ou des transistors bipolaires à grille isolée, sous le contrôle d'un module CTRL non représenté.

En mode de communication montante, le module de contrôle CTRL peut configurer les commutateurs K1, K2, K3, K4, K5 et K6 de manière différente ; dans ce cas l'impédance de charge présentée par le moteur de l'actionneur ACT varie en fonction de la configuration des commutateurs électroniques.

Dans l'exemple illustré, par la figure 5 l'actionneur ACT est alimenté en tension. Pour représenter un élément binaire donné, l'actionneur ACT génère une séquence temporelle du signal de réponse en courant I, respectivement en tension u, en variant la configuration des commutateurs Ki selon une séquence spécifique à chaque élément binaire ; il en résulte une séquence temporelle de courant spécifique à chaque élément binaire.

L'invention peut être mise en oeuvre par un actionneur ACT utilisant d'autre types de moteurs connus, tel qu'un moteur asynchrone, synchrone, universel (DC), pas à pas ou piézoélectrique.

Les valeurs des impédances peuvent varier d'un produit à l'autre ou, pour un même produit, avec les conditions de fonctionnement. Pour le même signal d'alimentation en tension U, respectivement en courant i, les séquences temporelles du signal de réponse en courant, respectivement en tension, peuvent donc être différentes.

Dans l'exemple illustré par les figures 4, 4a et 4b et 5, l'étape E240 de génération de la première séquence de calibration SeqCal, représentative de l'élément binaire de calibration prédéfini bCal, valant par exemple « 1 », comprend une sous-étape E242 de maintien d'une première configuration des commutateurs, assurant une impédance Za pendant une première durée Ta. Cette configuration permet la variation du signal de réponse en courant I, respectivement en tension u, jusqu'à une valeur extrême, minimale ou maximale, Iₑ, uₑ.

Ensuite une sous-étape E244 de maintien d'une deuxième configuration des commutateurs, assurant une impédance Zb pendant une deuxième durée Tb, est exécutée. Dans le cas d'une alimentation en tension U, cette deuxième configuration permet la recharge d'éléments capacitifs C de l'actionneur ACT, entraînant une décroissance du signal de réponse en courant I.

Une troisième sous-étape E246 de maintien d'une troisième configuration des commutateurs, assure une impédance Zc pendant une troisième durée Tc. Dans le cas d'une alimentation en tension, cette configuration peut correspondre à un maintien d'un signal de réponse en courant I quasi-nul sur les fils c1, c2.

De la même manière, l'élément binaire complémentaire, valant par exemple « 0 », peut être représenté par une séquence de deux configurations des commutateurs assurant respectivement les impédances Zd, Ze pendant des durées Td, Te.

Les valeurs Zd, Td peuvent être égales à Za, Ta, et les valeurs Ze, Te peuvent être égales à Zb, Tb. La séquence temporelle constituant le bit de valeur « 0 » peut différer de la séquence temporelle constituant le bit de valeur « 1 » uniquement en ce qu'elle ne comprend pas de sous-étape de maintien d'une configuration des commutateurs, assurant l'impédance Zc pendant la durée Tc. En particulier, cette dernière configuration peut ne pas exister, autrement dit Tc=0. Une telle réalisation est illustrée par la figure 5.

D'autres modes de réalisation peuvent être mis en oeuvre
- en ajoutant aux séquences représentatives des deux éléments binaires des durées Ti, Tj des configurations d'impédance Zi, respectivement Zj ; ou
- en supprimant des séquences, par exemple la sous-étape optionnelle E246 pour les étapes E240, E260.

Les valeurs des temps Ta, Tb, Tc, Td, Te, Ti et Tj peuvent être prédéterminées. Alternativement, les configurations correspondantes assurant les impédances Za, ..., Zj sont maintenues tant que le signal de réponse en courant I, respectivement en tension u, sur les fils c1, c2 n'ont pas atteint des valeurs prédéterminées Iₐ, ..., Iⱼ, respectivement uₐ, ..., uⱼ.

Les deux méthodes peuvent être utilisées pour une même séquence : les durées Ta et Tb peuvent être déterminées en fonction du signal de réponse en courant I, respectivement en tension u ; la durée Tc peut être prédéterminée.

Par exemple, la durée Ta est la durée de variation du signal de réponse entre une première valeur seuil Is1, respectivement us1, prédéfinie et une valeur extrême Iₑ, respectivement uₑ ; Tb, est la durée de variation du signal de réponse entre la valeur extrême Iₑ, respectivement uₑ, et une deuxième valeur seuil Is2, us2 prédéfinie.

Dans le mode de réalisation représenté, l'actionneur ACT émet au cours d'une étape E22, les éléments binaires constituant la trame de données, en générant, suivant la valeur de l'élément binaire à émettre :
- la première séquence de calibration SeqCal, si l'élément binaire à émettre est égal au bit de calibration bCal, au cours d'une étape E260 ; ou
- la deuxième séquence de calibration SeqCal2, si l'élément binaire à émettre est complémentaire au bit de calibration bCal, au cours d'une étape E270.

Dans un mode de réalisation, l'actionneur peut émettre, lors d'une étape E23, après l'émission des données une quatrième séquence temporelle du signal de réponse indiquant la fin de la trame.

Comme déjà mentionné, une étape E21 de calibration est exécutée par l'actionneur ACT pour transmettre à l'entité d'alimentation et de communication IMS les informations concernant l'encodage des informations qui seront transmises par la suite.

Cette étape peut être exécutée plusieurs fois au cours d'une même connexion (ou un même mode de fonctionnement) si les conditions de transmission changent. Un tel changement, nécessitant une nouvelle calibration, peut être detecté par chaque élément du système SYS et signalé à l'élément distant, comme expliqué dans la suite de ce document.

Le procédé mis en oeuvre par l'actionneur ACT comprend une étape E24 de décision si une nouvelle étape E21 de calibration est à exécuter. Du point de vue de l'actionneur ACT deux situations peuvent se présenter : l'actionneur ACT détecte lui-même un changement significatif des conditions de fonctionnement, nécessitant une nouvelle calibration, ou l'entité d'alimentation et communication IMS émet une requête de calibration, et l'actionneur détecte cette requête.

Dans le premier cas, une nouvelle calibration peut être signalée par l'actionneur ACT à l'entité d'alimentation et de communication IMS au cours de l'étape E24, par la génération d'une troisième séquence temporelle prédéterminée du signal de réponse en courant IReqCal2, respectivement en tension, uReqCal.

Une nouvelle émission de la séquence de calibration SeqCal peut être initiée par l'actionneur ACT si le nombre d'erreurs de transmission détectées est trop important. Cette détection d'erreurs peut être effectuée grâce aux techniques connues, comme la répétition d'une trame par l'actionneur si cette trame n'est pas acquittée par l'entité d'alimentation et de communication dans un temps prédéterminé.

Dans le deuxième cas, l'actionneur ACT peut détecter, au cours de l'étape E24, une variation temporelle prédéterminée du signal d'alimentation, uReqCal, respectivement du courant iReqCal, générée par l'entité d'alimentation et de communication IMS. Suite à une telle détection, l'actionneur ACT peut générer à nouveau la première séquence de calibration SeqCal, suivie dans certains modes de réalisation par la génération de la deuxième séquence de calibration SeqCal2.

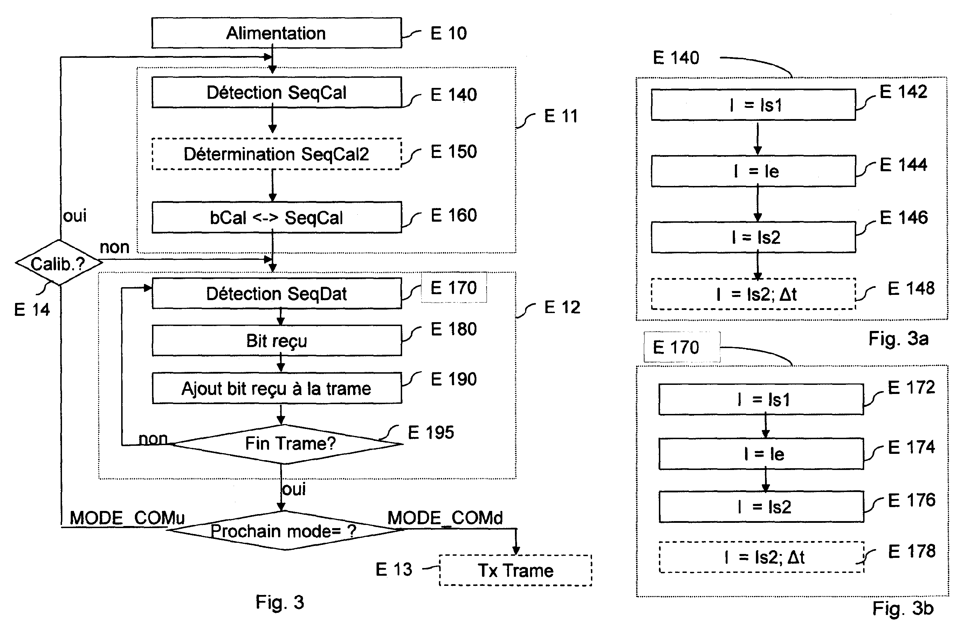

Un mode d'exécution du procédé mis en oeuvre par l'entité d'alimentation et de communication IMS est décrit maintenant en référence aux figures 3, 3a et 3b.

L'entité d'alimentation et de communication IMS détermine la première séquence de calibration SeqCal, au cours d'une étape E140 , c'est-à-dire que l'entité d'alimentation et de communication détermine ou identifie des caractéristiques électriques du signal de réponse, en particulier des caractéristiques électriques pendant une durée soit prédéterminée, soit déterminée en fonction du signal de réponse, comme expliqué ci-dessus.

Une signification de représentation d'un premier élément binaire de calibration bCal prédéterminé est attribuée à la première séquence de calibration (SeqCal) lors d'une étape E160 ; c'est-à-dire que l'entité d'alimentation et de communication attribue un sens à la première séquence de calibration, en particulier, elle peut attribuer la valeur « 1 » ou la valeur « 0 » à la première séquence de calibration SeqCal.

Ensuite, au cours d'une étape E12, l'entité d'alimentation et de communication IMS reçoit au moins une trame de données constituée par une suite d'éléments binaires. Chaque élément binaire est représenté par une séquence temporelle du signal de réponse en courant I, respectivement en tension u, dite séquence de données SeqDat. Ces séquences de données, détectées entre les bornes b1, b2, sont représentatives soit de l'élément binaire de calibration bCal, soit de l'élément binaire complémentaire. Chaque élément binaire de données égal à l'élément binaire de calibration bCal est représenté par une séquence temporelle du signal de réponse image de la première séquence de calibration SeqCal.

L'entité d'alimentation et de communication IMS, ayant des moyens de détermination des séquences temporelles du signal de réponse I, u, sur les fils c1, c2, peut déduire les éléments binaires transmis.

L'entité d'alimentation et de communication IMS, comprend des moyens d'échantillonnage et mémorisation du signal de réponse en courant I, respectivement en tension u, détecté entre ses bornes b1, b2, L'entité d'alimentation et de communication IMS peut déterminer ainsi l'image de la séquence temporelle du signal de réponse I, u.

L'entité d'alimentation et de communication IMS fournit l'alimentation électrique à l'actionneur ACT, au cours d'une étape E10. Cette alimentation peut provenir d'un générateur de tension continue, alternative ou d'un générateur de courant. L'alimentation électrique est générée par l'entité d'alimentation et de communication IMS entre ses bornes électriques b1, b2, connectées par l'intermédiaire des fils c1, c2, aux bornes électriques de l'actionneur ACT, a1, a2.
- Ensuite, l'entité d'alimentation et de communication IMS détermine, au cours d'une étape E140, une première séquence temporelle d'un signal de réponse I, respectivement u, dite première séquence de calibration SeqCal.
- Une signification de représentation d'un premier élément binaire prédéterminé, bCal, est attribuée, lors d'une étape E160, à la première séquence de calibration SeqCal.

Dans un mode de réalisation, l'étape E140 de détermination de la séquence de calibration SeqCal comprend les sous-étapes :
- E142 de détermination du début de la séquence, lorsque le signal de réponse en courant I, respectivement en tension u, sur les fils c1, c2, atteint une première valeur seuil prédéterminée, Is1, respectivement us1 ;
- E144 de détermination d'une valeur extrême, minimale ou maximale, du signal de réponse en courant Iₑ, respectivement en tension uₑ, sur les fils c1, c2 ; cette détermination utilise des techniques connues, tel que échantillonnage, mémorisation et traitement de signal ;
- E146 de détermination de la fin de la séquence lorsque le signal de réponse en courant I, respectivement en tension u générée sur les fils c1, c2 atteint une deuxième valeur seuil Is2, respectivement us2.

L'étape E140 peut comprendre une sous-étape optionnelle E148 de détection d'un signal de réponse en courant I, respectivement en tension u, ayant une valeur sensiblement égale à la deuxième valeur seuil Is2, respectivement us2 pendant une durée prédéterminée.

Le signal de réponse en courant I, respectivement en tension u, est ainsi échantillonné et mémorisé entre le début et la fin de la séquence SeqCal.

Le deuxième élément binaire, complémentaire à l'élément binaire de calibration bCal, peut être représenté par une deuxième séquence de calibration SeqCal2.

Cette deuxième séquence de calibration SeqCal2 peut être détectée par l'entité d'alimentation et de communication IMS lors d'une étape E150.

Alternativement, la deuxième séquence de calibration SeqCal2 peut être déduite à partir de la première séquence de calibration SeqCal, par exemple par ajout ou suppression d'une partie prédéterminée de l'image de la première séquence de calibration SeqCal.

A noter que seulement la première séquence de calibration SeqCal doit être connue, le deuxième élément binaire pouvant être constitué par une séquence quelconque, pas nécessairement toujours la même, différente de la première séquence de calibration SeqCal.

Ensuite, au cours d'une étape E12 l'entité d'alimentation et de communication IMS reçoit une suite de séquences temporelles du signal de réponse en courant I, respectivement en tension u, représentative d'une suite d'éléments binaires, chaque élément binaire égal à l'élément binaire de calibration bCal étant représenté par une séquence temporelle image de la première séquence de calibration SeqCal. L'entité d'alimentation et de communication déduit de cette suite de séquences temporelles une suite d'informations utiles.

Dans l'exemple illustré par les figures 3, 3a et 3b, l'étape E12 de réception comprend une sous-étape E170 de détection d'une séquence temporelle du signal de réponse en courant I, respectivement u, représentative d'un élément binaire bDat, dite séquence de donnée SeqDat.

Dans un mode de réalisation, l'étape E170 de détection de la séquence de données SeqDat comprend les sous-étapes :
- détection E172 d'une première valeur du signal de réponse en courant I, respectivement u, généré sur les fils c1, c2, sensiblement égale à la première valeur seuil Is1, us1 ;
- détection E174 d'une deuxième valeur du signal de réponse courant I, respectivement u, généré sur les fils c1, c2, sensiblement égale à la valeur extrême Iₑ, respectivement uₑ ;
- détection E176 d'une troisième valeur du signal de réponse en courant I, respectivement en tension u, généré sur les fils c1, c2, sensiblement égale à la deuxième valeur seuil Is2, us2.

L'étape E170 peut comprendre une sous-étape optionnelle E178 de détection d'un signal de réponse en courant I, respectivement en tension u, ayant une valeur sensiblement égale à la deuxième valeur seuil Is2, respectivement us2 pendant une durée prédéterminée.

Une fois la séquence SeqDat déterminée, l'entité d'alimentation et de communication peut déterminer, lors d'une sous-étape E180, la valeur de l'élément binaire bDat par comparaison de la séquence de données SeqDat avec au moins la première séquence de calibration SeqCal : une séquence de données, image de la première séquence de calibration SeqCal est interprétée par l'entité d'alimentation et de communication IMS comme un élément binaire de données égal à l'élément binaire de calibration bCal.

Si le mode de réalisation met en oeuvre une étape de détermination, par détection ou déduction, de la deuxième séquence de calibration SeqCal2, la séquence de données SeqDat peut être comparée, au cours de la sous-étape E180 avec les deux séquences de calibration, SeqCal, SeqCal2.

Dans un mode de réalisation, la fin d'une trame de données est déterminée lors d'une étape E195, par la détection d'une séquence temporelle du signal de réponse spécifique de fin de trame. Alternativement, la fin d'une trame peut être déterminée en comparant le nombre d'octets reçus avec le nombre d'octets attendus.

L'étape E140 de détection de la première séquence de calibration SeqCal, suivie éventuellement de l'étape optionnelle E150 de détection de la deuxième séquence de calibration SeqCal2, constitue(nt) une étape E11 de détection de calibration.

Le rôle de cette étape E11 est de permettre à l'entité d'alimentation et de communication IMS de déterminer les informations concernant l'encodage des données qui seront transmises par la suite. De cette manière l'encodage peut changer à chaque nouvelle connexion et/ou à chaque modification de conditions de transmission.

Une étape E11 de détection de calibration est exécutée au moins une fois, suite à la connexion entre l'entité d'alimentation et de communication IMS et l'actionneur ACT, mais elle peut être exécutée plusieurs fois durant une même connexion, par exemple si une variation de température est détectée, ou si le nombre d'erreurs de transmissions est trop élevé. Cette détection d'erreurs peut être effectuée grâce aux techniques connues, comme les CRC, les bits de parité, ou toute autre séquence destinée à vérifier l'intégrité de données reçues.

Un changement de conditions de fonctionnement, détecté par l'entité d'alimentation et de communication IMS peut être signalé à l'actionneur ACT au cours d'une étape E14 par la génération d'une variation temporelle prédéterminée du signal d'alimentation UReqCal1, respectivement iReqCal1. Cette variation temporelle du signal d'alimentation constitue une requête de calibration émise par l'entité d'alimentation et de communication IMS.

Un changement de conditions de fonctionnement nécessitant une nouvelle calibration peut être signalé aussi par l'actionneur ACT ; dans ce cas, une troisième séquence temporelle du signal de réponse en courant, IReqCal2, respectivement en tension, uReqCal2, est générée par l'actionneur ACT.

L'entité d'alimentation et de communication IMS peut détecter, au cours de l'étape E14, cette troisième séquence temporelle prédéterminée du signal de réponse IReqCal2, respectivement de la tension uReqCal2.

L'entité d'alimentation et de communication IMS peut donc, lors de l'étape E14, détecter ou générer une requête de calibration et déterminer ainsi que la prochaine étape à exécuter est une étape E140 de détermination de la séquence de calibration SeqCal.

## Revendications

1. Procédé de communication d'un actionneur (ACT) domotique comprenant un moteur électrique d'entraînement d'un élément mobile dans un bâtiment et deux bornes électriques (a1, a2) permettant l'alimentation de l'actionneur (ACT) par une entité d'alimentation et de communication (IMS) et la communication entre l'actionneur (ACT) et l'entité d'alimentation et de communication (IMS), le procédé comprenant les étapes :
- analyse (E20) d'un signal d'alimentation (U, i) fourni par l'entité d'alimentation et de communication (IMS) ;
- génération (E240) d'une première séquence temporelle d'un signal de réponse (I, u), représentative d'un élément binaire de calibration (bCal) prédéterminé, dite première séquence de calibration (SeqCal) ;
- émission (E22) d'une suite de séquences temporelles du signal de réponse (I, u), représentative d'une suite d'éléments binaires, chaque élément binaire de cette suite, égal à l'élément binaire de calibration (bCal), étant représenté par une séquence temporelle image de la première séquence de calibration (SeqCal).

2. Procédé selon la revendication 1, **caractérisé en ce qu'**il comprend en outre, préalablement à l'étape d'émission (E22) une étape (E250) de génération d'une deuxième séquence temporelle du signal de réponse (I,u), représentative d'un élément binaire complémentaire à l'élément binaire de calibration (bCal), dite deuxième séquence de calibration (SeqCal2).

3. Procédé selon la revendication 2, **caractérisé en ce que** l'étape d'émission (E22) comprend la génération, pour chaque élément binaire différent de l'élément binaire de calibration (bCal), d'une séquence temporelle image de la deuxième séquence de calibration (SeqCal2).

4. Procédé selon l'une des revendications précédentes, **caractérisé en ce que** l'étape (E240) de génération de la première séquence de calibration (SeqCal) comprend les sous-étapes :
- configuration (E242) de l'impédance (Zact) de l'actionneur à une première valeur (Za) pendant une première durée (Ta) ;
- configuration (E244) de l'impédance (Zact) de l'actionneur à une deuxième valeur (Zb) pendant une deuxième durée (Tb).

5. Procédé selon la revendication 4, **caractérisé en ce que** l'étape (E240) de génération de la première séquence de calibration (SeqCal) comprend une sous-étape de configuration (E246) de l'impédance (Zact) dudit actionneur à une troisième valeur (Zc) pendant une troisième durée (Tc).

6. Procédé selon l'une des revendications précédentes, **caractérisé en ce qu'**il comprend une étape (E24) de détection d'une variation temporelle (UReqCal1, iReqCal1) du signal d'alimentation (U, i), représentative d'une requête de calibration émise par l'entité d'alimentation et de communication (IMS) et/ou **en ce qu'**il comprend une étape (E24) de génération d'une troisième séquence temporelle (IReqCal2, uReqCal2) du signal de réponse (I, u), représentative d'une signalisation de calibration émise par l'actionneur (ACT).

7. Procédé de communication d'une entité d'alimentation et de communication (IMS) comprenant deux bornes électriques (b1, b2) permettant
- d'alimenter un actionneur (ACT) domotique comprenant un moteur électrique d'entraînement d'un élément mobile dans un bâtiment et
- de communiquer avec cet actionneur (ACT),
le procédé comprenant les étapes :
- génération (E10) d'un signal d'alimentation (U, i) entre les bornes électriques (b1, b2) ;
- détermination (E140) d'une première séquence temporelle d'un signal de réponse (I, u), dite première séquence de calibration (SeqCal) ;
- attribution (E160) d'une signification de représentation d'un premier élément binaire de calibration (bCal) prédéterminé à la première séquence de calibration (SeqCal) ;
- réception (E12) d'une suite de séquences temporelles du signal de réponse (I, u), représentative d'une suite d'éléments binaires, chaque élément binaire de cette suite, égal à l'élément binaire de calibration (bCal), étant représenté par une séquence temporelle image de la première séquence de calibration (SeqCal).

8. Procédé selon la revendication 7, **caractérisé en ce qu'**il comprend en outre une étape (E150) de détermination d'une deuxième séquence temporelle du signal de réponse (I,u), représentative de l'élément binaire complémentaire à l'élément binaire de calibration (bCal), dite deuxième séquence de calibration (SeqCal2).

9. Procédé selon l'une des revendications 7 et 8, **caractérisé en ce que** l'étape (E140) de détermination de la première séquence de calibration (SeqCal) comprend les sous-étapes :
- détermination (E142) d'une première valeur seuil (Is1, us1) du signal de réponse (I, u) ;
- détermination (E144) d'une valeur extrême (Iₑ, uₑ) du signal de réponse (I, u) ;
- détermination (E146) d'une deuxième valeur seuil (Is2, us2) du signal de réponse (I, u).

10. Procédé de communication selon l'une des revendications 7 à 9, **caractérisé en ce que** l'étape de réception (E12) de la suite de séquences temporelles comprend les sous-étapes :
- détection (E170) d'une séquence temporelle du signal de réponse (I, u), représentative d'un élément binaire (bDat), dite séquence de donnée (SeqDat) ;
- détermination (E180) de la valeur de l'élément binaire (bDat) par comparaison de la séquence de données (SeqDat) avec au moins la première séquence de calibration (SeqCal).

11. Procédé de communication selon l'une des revendications 7 à 10, **caractérisé en ce que** l'étape (E170) de détection de la séquence de données (SeqDat) comprend les sous-étapes :
- détection (E172) d'une première valeur du signal de réponse (I, u) sensiblement égale à la première valeur seuil (Is1, us1) ;
- détection (E174) d'une deuxième valeur du signal de réponse (I, u) sensiblement égale à la valeur extrême (Iₑ, uₑ) ;
- détection (E176) d'une troisième valeur du signal de réponse (I, u) sensiblement égale à la deuxième valeur seuil (Is2, Us2).

12. Procédé selon l'une des revendications 7 à 11 **caractérisé en ce qu'**il comprend une étape (E14) de génération d'une variation temporelle (UReqCal1, iReqCal1) du signal d'alimentation (U, i), représentative d'une requête de calibration émise par l'entité d'alimentation et de communication (IMS) et/ou **en ce qu'**il comprend une étape (E14) de détection d'une troisième séquence temporelle (IReqCal2, uReqCal2) du signal de réponse (I, u), représentative d'une signalisation* de calibration émise par l'actionneur (ACT).

13. Actionneur (ACT) domotique comprenant
- un moteur électrique d'entraînement d'un élément mobile dans un bâtiment ;
- deux bornes électriques (a1, a2) permettant l'alimentation de l'actionneur (ACT) par une entité d'alimentation et de communication (IMS) et la communication entre l'actionneur (ACT) et l'entité d'alimentation et de communication (IMS) ;
- des moyens (20, 21, 22, 23)
- d'analyse du signal d'alimentation (U, i) fourni par l'entité d'alimentation et de communication (IMS) ;
- de génération d'une première séquence temporelle d'un signal de réponse (I, u), représentative d'un élément binaire de calibration (bCal) prédéterminé, dite première séquence de calibration (SeqCal) ;
- d'émission d'une suite de séquences temporelles du signal de réponse (I, u), représentative d'une suite d'éléments binaires, chaque élément binaire de cette suite, égal à l'élément binaire de calibration (bCal), étant représenté par une séquence temporelle image de la première séquence de calibration (SeqCal).

14. Entité d'alimentation et de communication (IMS) comprenant
- deux bornes électriques (b1, b2) permettant d'alimenter un actionneur (ACT) domotique comprenant un moteur électrique d'entraînement d'un élément mobile dans un bâtiment et de communiquer avec cet actionneur (ACT) ;
- des moyens (10, 11, 12, 13)
- de génération d'un signal d'alimentation (U, i) entre les bornes électriques (b1, b2) ;
- de détermination d'une première séquence temporelle d'un signal de réponse (I, u), dite première séquence de calibration (SeqCal) ;
- d'attribution d'une signification de représentation d'un premier élément binaire de calibration (bCal) prédéterminé à la première séquence de calibration (SeqCal) ;
- de réception d'une suite de séquences temporelles du signal de réponse (I, u), représentative d'une suite d'éléments binaires, chaque élément binaire de cette suite, égal à l'élément binaire de calibration (bCal), étant représenté par une séquence temporelle image de la première séquence de calibration (SeqCal).

15. Système (SYS) comprenant au moins une entité d'alimentation et de communication (IMS) selon la revendication 14 et au moins un actionneur (ACT) selon la revendication 13.

## Patentansprüche

1. Kommunikationsverfahren eines Haustechnikaktuators (ACT), umfassend einen Elektromotor für den Antrieb eines mobilen Elements in einem Gebäude und zwei elektrische Klemmen (a1, a2), die die Versorgung des Aktuators (ACT) durch eine Versorgungs- und Kommunikationseinheit (IMS) und die Kommunikation zwischen dem Aktuator (ACT) und der Versorgungs- und Kommunikationseinheit (IMS) ermöglichen, wobei das Verfahren die folgenden Schritte umfasst:
- Analyse (E20) eines Versorgungssignals (U, i), das von der Versorgungs- und Kommunikationseinheit (IMS) geliefert wird;
- Erzeugung (E240) einer ersten Zeitsequenz eines Antwortsignals (I, u), die für ein vorbestimmtes binäres Kalibrierelement (bCal) repräsentativ ist, erste Kalibriersequenz (SeqCal) genannt;
- Senden (E22) einer Folge von Zeitsequenzen des Antwortsignals (I, u), die für eine Folge von binären Elementen repräsentativ ist, wobei jedes binäre Element dieser Folge gleich dem binären Kalibrierelement (bCal) durch eine Bildzeitsequenz der ersten Kalibriersequenz (SeqCal) dargestellt ist.

2. Verfahren nach Anspruch 1, **dadurch gekennzeichnet, dass** es ferner vor dem Schritt des Sendens (E22) einen Schritt (E250) der Erzeugung einer zweiten Zeitsequenz des Antwortsignals (I, u) umfasst, die für ein binäres Element komplementär zu dem binären Kalibrierelement (bCal) repräsentativ ist, zweite Kalibriersequenz (SeqCal2) genannt.

3. Verfahren nach Anspruch 2, **dadurch gekennzeichnet, dass** der Schritt des Sendens (E22) für jedes zum binären Kalibrierelement (bCal) unterschiedliche binäre Element die Erzeugung einer Bildzeitsequenz der zweiten Kalibriersequenz (SeqCal2) umfasst.

4. Verfahren nach einem der vorhergehenden Ansprüche, **dadurch gekennzeichnet, dass** der Schritt (E240) der Erzeugung der ersten Kalibriersequenz (SeqCal) die folgenden Unterschritte umfasst:
- Konfiguration (E242) der Impedanz (Zact) des Aktuators auf einen ersten Wert (Za) während einer ersten Zeitdauer (Ta);
- Konfiguration (E244) der Impedanz (Zact) des Aktuators auf einen zweiten Wert (Zb) während einer zweiten Zeitdauer (Tb).

5. Verfahren nach Anspruch 4, **dadurch gekennzeichnet, dass** der Schritt (E240) der Erzeugung der ersten Kalibriersequenz (SeqCal) einen Unterschritt der Konfiguration (E246) der Impedanz (Zact) des Aktuators auf einen dritten Wert (Zc) während einer dritten Zeitdauer (Tc) umfasst.

6. Verfahren nach einem der vorhergehenden Ansprüche, **dadurch gekennzeichnet, dass** es einen Schritt (E24) der Erfassung einer Zeitvariation (UReqCal1, iReqCal1) des Versorgungssignals (U, i) umfasst, die für eine von der Versorgungs- und Kommunikationseinheit (IMS) gesandte Kalibrieranfrage repräsentativ ist, und/oder dass es einen Schritt (E24) der Erzeugung einer dritten Zeitsequenz (IReqCal2, uReqCal2) des Antwortsignals (I, u) umfasst, die für eine vom Aktuator (ACT) gesandte Kalibrieranzeige repräsentativ ist.

7. Kommunikationsverfahren einer Versorgungs- und Kommunikationseinheit (IMS), umfassend zwei elektrische Klemmen (b1, b2), die es ermöglichen,
- einen Haustechnikaktuator (ACT) zu versorgen, umfassend einen Elektromotor für den Antrieb eines mobilen Elements in einem Gebäude, und
- mit diesem Aktuator (ACT) zu kommunizieren,
wobei das Verfahren die folgenden Schritte umfasst:
- Erzeugung (E10) eines Versorgungssignals (U, i) zwischen den elektrischen Klemmen (b1, b2);
- Bestimmung (E140) einer ersten Zeitsequenz eines Antwortsignals (I, u), erste Kalibriersequenz (SeqCal) genannt;
- Zuordnung (E160) einer Bedeutung einer Darstellung eines ersten vorbestimmten binären Kalibrierelements (bCal) zu der ersten Kalibriersequenz (SeqCal);
- Empfangen (E12) einer Folge von Zeitsequenzen des Antwortsignals (I, u), die für eine Folge von binären Elementen repräsentativ ist, wobei jedes binäre Element dieser Folge gleich dem binären Kalibrierelement (bCal) durch eine Bildzeitsequenz der ersten Kalibriersequenz (SeqCal) dargestellt ist.

8. Verfahren nach Anspruch 7, **dadurch gekennzeichnet, dass** es ferner einen Schritt (E150) der Bestimmung einer zweiten Zeitsequenz des Antwortsignals (I, u) umfasst, die für das binäre Element komplementär zu dem binären Kalibrierelement (bCal) repräsentativ ist, zweite Kalibriersequenz (SeqCal2) genannt.

9. Verfahren nach einem der Ansprüche 7 und 8, **dadurch gekennzeichnet, dass** der Schritt (E140) der Bestimmung der ersten Kalibriersequenz (SeqCal) die folgenden Unterschritte umfasst:
- Bestimmung (E142) eines ersten Schwellenwerts (Is1, us1) des Antwortsignals (I, u);
- Bestimmung (E144) eines zweiten Extremwerts (Iₑ, uₑ) des Antwortsignals (I, u);
- Bestimmung (E146) eines zweiten Schwellenwerts (Is2, us2) des Antwortsignals (I, u).

10. Kommunikationsverfahren nach einem der Ansprüche 7 bis 9, **dadurch gekennzeichnet, dass** der Schritt des Empfangens (E12) der Folge von Zeitsequenzen die folgenden Unterschritte umfasst:
- Erfassung (E170) einer Zeitsequenz des Antwortsignals (I, u), die für ein binäres Element (bDat) repräsentativ ist, Datensequenz (SeqDat) genannt;
- Bestimmung (E180) des Werts des binären Elements (bDat) durch Vergleichen der Datensequenz (SeqDat) mit mindestens der ersten Kalibriersequenz (SeqCal).

11. Kommunikationsverfahren nach einem der Ansprüche 7 bis 10, **dadurch gekennzeichnet, dass** der Schritt (E170) der Erfassung der Datensequenz (SeqDat) die folgenden Unterschritte umfasst:
- Erfassung (E172) eines ersten Werts des Antwortsignals (I, u) im Wesentlichen gleich dem ersten Schwellenwert (Is1, us1);
- Erfassung (E174) eines zweiten Werts des Antwortsignals (I, u) im Wesentlichen gleich dem Extremwert (Iₑ, uₑ) ;
- Erfassung (E176) eines dritten Werts des Antwortsignals (I, u) im Wesentlichen gleich dem zweiten Schwellenwert (Is2, Us2).

12. Verfahren nach einem der Ansprüche 7 bis 11, **dadurch gekennzeichnet, dass** es einen Schritt (E14) der Erzeugung einer Zeitvariation (UReqCal1, iReqCal1) des Versorgungssignals (U, i) umfasst, die für eine von der Versorgungs- und Kommunikationseinheit (IMS) gesandte Kalibrieranfrage repräsentativ ist, und/oder dass es einen Schritt (E14) der Erfassung einer dritten Zeitsequenz (IReqCal2, uReqCal2) des Antwortsignals (I, u) umfasst, die für eine vom Aktuator (ACT) gesandte Kalibrieranzeige repräsentativ ist.

13. Haustechnikaktuator (ACT), umfassend:
- einen Elektromotor für den Antrieb eines mobilen Elements in einem Gebäude;
- zwei elektrische Klemmen (a1, a2), die die Versorgung des Aktuators (ACT) durch eine Versorgungs- und Kommunikationseinheit (IMS) und die Kommunikation zwischen dem Aktuator (ACT) und der Versorgungs- und Kommunikationseinheit (IMS) ermöglichen,
- Mittel (20, 21, 22, 23)
- zur Analyse eines Versorgungssignals (U, i), das von der Versorgungs- und Kommunikationseinheit (IMS) geliefert wird;
- zur Erzeugung einer ersten Zeitsequenz eines Antwortsignals (I, u), die für ein vorbestimmtes binäres Kalibrierelement (bCal) repräsentativ ist, erste Kalibriersequenz (SeqCal) genannt;
- zum Senden einer Folge von Zeitsequenzen des Antwortsignals (I, u), die für eine Folge von binären Elementen repräsentativ ist, wobei jedes binäre Element dieser Folge gleich dem binären Kalibrierelement (bCal) durch eine Bildzeitsequenz der ersten Kalibriersequenz (SeqCal) dargestellt ist.

14. Versorgungs- und Kommunikationseinheit (IMS) umfassend:
- zwei elektrische Klemmen (b1, b2), die es ermöglichen, einen Haustechnikaktuator (ACT) zu versorgen, umfassend einen Elektromotor für den Antrieb eines mobilen Elements in einem Gebäude, und mit diesem Aktuator (ACT) zu kommunizieren;
- Mittel (10, 11, 12, 13)
- zur Erzeugung eines Versorgungssignals (U, i) zwischen den elektrischen Klemmen (b1, b2);
- zur Bestimmung einer ersten Zeitsequenz eines Antwortsignals (I, u), erste Kalibriersequenz (SeqCal) genannt;
- zur Zuordnung einer Anzeige einer Darstellung eines ersten vorbestimmten binären Kalibrierelements (bCal) zu der ersten Kalibriersequenz (SeqCal);
- zum Empfangen einer Folge von Zeitsequenzen des Antwortsignals (I, u), die für eine Folge von binären Elementen repräsentativ ist, wobei jedes binäre Element dieser Folge gleich dem binären Kalibrierelement (bCal) durch eine Bildzeitsequenz der ersten Kalibriersequenz (SeqCal) dargestellt ist.

15. System (SYS), umfassend mindestens eine Versorgungs- und Kommunikationseinheit (IMS) nach Anspruch 14 und mindestens einen Aktuator (ACT) nach Anspruch 13.

## Claims

1. A communication method for a home automation actuator (ACT) comprising an electric motor driving a moving element in a building and two electric terminals (a1, a2) making it possible to power the actuator (ACT) by a power supply and communication entity (IMS) and allowing communication between the actuator (ACT) and the power supply and communication entity (IMS), the method comprising the following steps:
- analysis (E20) of a power supply signal (U, i) supplied by the power supply and communication entity (IMS);
- generation (E240) of a first time-sequence of a response signal (I, u), representative of a predetermined calibration binary element (bCal), called first calibration sequence (SeqCal);
- sending (E22) of a series of time-sequences of the response signal (I, u), representative of a series of binary elements, each binary element of this series, equal to the calibration binary element (bCal), being represented by a time-sequence which is an image of the first calibration sequence (SeqCal).

2. The method as claimed in claim 1, in which the method also comprises, prior to the sending step (E22), a step (E250) of generating a second time-sequence of the response signal (I,u), representative of an additional binary element to the calibration binary element (bCal), called second calibration sequence (SeqCal2).

3. The method as claimed in claim 2, in which the sending step (E22) comprises the generation, for each different binary element of the calibration binary element (bCal), of a time-sequence which is an image of the second calibration sequence (SeqCal2).

4. The method as claimed in one of the preceding claims, in which the step (E240) of generation of the first calibration sequence (SeqCal) comprises the following substeps:
- configuration (E242) of the impedance (Zact) of the actuator with a first value (Za) for a first duration (Ta);
- configuration (E244) of the impedance (Zact) of the actuator with a second value (Zb) for a second duration (Tb).

5. The method as claimed in claim 4, in which the step (E240) of generation of the first calibration sequence (SeqCal) comprises a substep of configuration (E246) of the impedance (Zact) of said actuator with a third value (Zc) for a third duration (Tc).

6. The method as claimed in one of the preceding claims, in which the method comprises a step (E24) of detection of a time variation (UReqCal1, iReqCall) of the power supply signal (U, i), representative of a calibration request sent by the power supply and communication entity (IMS) and/or, in which the method comprises a step (E24) of generation of a third time-sequence (IReqCal2, uReqCal2) of the response signal (I, u), representative of a signaling of calibration sent by the actuator (ACT).

7. A communication method for a power supply and communication entity (IMS) comprising two electric terminals (b1, b2) making it possible:
- to power a home automation actuator (ACT) comprising an electric motor driving a moving element in a building and
- to communicate with this actuator (ACT),
the method comprising the following steps:
- generation (E10) of a power supply signal (U, i) between the electric terminals (b1, b2);
- determination (E140) of a first time-sequence of a response signal (I, u), called first calibration sequence (SeqCal);
- assignment (E160) of a meaning of representation of a first predetermined calibration binary element (bCal) to the first calibration sequence (SeqCal);
- reception (E12) of a series of time-sequences of the response signal (I, u), representative of a series of binary elements, each binary element of this series, equal to the calibration binary element (bCal), being represented by a time-sequence which is an image of the first calibration sequence (SeqCal).

8. The method as claimed in claim 7, in which the method also comprises a step (E150) of determination of a second time-sequence of the response signal (I,u), representative of the additional binary element to the calibration binary element (bCal), called second calibration sequence (SeqCal2).

9. The method as claimed in claim 7 or 8, in which the step (E140) of determination of the first calibration sequence (SeqCal) comprises the following substeps:
- determination (E142) of a first threshold value (Is1, us1) of the response signal (I, u);
- determination (E144) of an extreme value (Iₑ, uₑ) of the response signal (I, u);
- determination (E146) of a second threshold value (Is2, us2) of the response signal (I, u).

10. The communication method as claimed in one of claims 7 to 9, in which the step of reception (E12) of the series of time-sequences comprises the following substeps:
- detection (E170) of a time-sequence of the response signal (I, u), representative of a binary element (bDat), called data sequence (SeqDat);
- determination (E180) of the value of the binary element (bDat) by comparing the data sequence (SeqDat) with at least the first calibration sequence (SeqCal).

11. The communication method as claimed in one of claims 7 to 10, in which the step (E170) of detection of the data sequence (SeqDat) comprises the following substeps:
- detection (E172) of a first value of the response signal (I, u) substantially equal to the first threshold value (Is1, us1);
- detection (E174) of a second value of the response signal (I, u) substantially equal to the extreme value (Iₑ, uₑ);
- detection (E176) of a third value of the response signal (I, u) substantially equal to the second threshold value (Is2, Us2).

12. The method as claimed in one of claims 7 to 11, in which the method comprises a step (E14) of generation of a time variation (UReqCal1, iReqCal1) of the power supply signal (U, i), representative of a calibration request sent by the power supply and communication entity (IMS) and/or in which the method comprises a step (E14) of detection of a third time-sequence (IReqCal2, uReqCal2) of the response signal (I, u), representative of a signaling of calibration sent by the actuator (ACT).

13. A home automation actuator (ACT) comprising
- an electric motor driving a moving element in a building;
- two electric terminals (a1, a2) making it possible to power the actuator (ACT) by a power supply and communication entity (IMS) and allowing communication between the actuator (ACT) and the power supply and communication entity (IMS);
- means (20, 21, 22, 23)
- for analyzing the power supply signal (U, i) supplied by the power supply and communication entity (IMS);
- for generating a first time-sequence of a response signal (I, u), representative of a predetermined calibration binary element (bCal), called first calibration sequence (SeqCal);
- for sending a series of time-sequences of the response signal (I, u), representative of a series of binary elements, each binary element of this series, equal to the calibration binary element (bCal), being represented by a time-sequence which is an image of the first calibration sequence (SeqCal).

14. A power supply and communication entity (IMS) comprising
- two electric terminals (b1, b2) making it possible to power a home automation actuator (ACT) comprising an electric motor driving a moving element in a building and allowing communication with this actuator (ACT);
- means (10, 11, 12, 13)
- for generating a power supply signal (U, i) between the electric terminals (b1, b2);
- for determining a first time-sequence of a response signal (I, u), called first calibration sequence (SeqCal);
- for assigning a meaning of representation of a first predetermined calibration binary element (bCal) to the first calibration sequence (SeqCal);
- for receiving a series of time-sequences of the response signal (I, u), representative of a series of binary elements, each binary element of this series, equal to the calibration binary element (bCal), being represented by a time-sequence which is an image of the first calibration sequence (SeqCal).

15. A system (SYS) comprising at least one power supply and communication entity (IMS) as claimed in claim 14 and at least one actuator (ACT) as claimed in claim 13.
